# EUROPEAN PATENT APPLICATION

(11) **EP 1 662 084 A2**
(43) Date of publication of application: **31.05.2006**
(21) Application number: 05380223.7
(22) Date of filing: 11.10.2005
(51) Int. Cl.: E05F 11/38

(54) **Guide for liftable glass panes of vehicle door windows**

(30) Priority: 29.11.2004 ES 200402713 U
(71) Applicant: Seat, S.A., 08040 Barcelona (ES)
(72) Inventor: Fernadez Contreras, Oscar, 08760 Martorell (Barcelona) (ES); Martinez Benzal, José Luis, 08760 Martorell (Barcelona) (ES); Medina Ledantes, Angel, 08760 Martorell (Barcelona) (ES)
(74) Representative: Carvajal y Urquijo, Isabel

(57) **Abstract**

A guide for liftable glass panes of vehicle door windows, made up of a profile made from elastically strainable material which is fixed along the vertical sides and the upper horizontal side of the door window opening, said profile having on the corner areas a channel delimited by two flaps, projections on which the inner flap rests when the glass pane reaches said corners, so that the glass pane is compressed between the two flaps.

## Description

The present invention refers to a guide for liftable glass panes of vehicle door windows, made up of a profile made from elastically strainable material which is fixed along the vertical sides and the upper horizontal side of the door space delimiting the windows.

These guides are the adjusting element of the glass pane on the vertical and upper horizontal sides of the door window space and must be a shock-absorbing and directing element of the window glass panes in their sliding, both for the opening and the closing thereof. These guides have a more or less homogenous profile which allows guiding the glass pane by using flexible flaps covered with a surface designed to reduce the coefficient of friction between the guide and the glass pane.

The guides are arranged on the outer side of the frame of the vehicle door window opening, except on its lower side, where there is a glazing strip. The guide profile has a coupling system consisting in rear projections with pin profiles which are intended for being tightly introduced through the openings on the frame. Furthermore, the profile has a peripheral C-shaped tab which allows surrounding the innermost side of the door frame, such that the bodywork is hidden and a correct positioning of the entire guide is assured. This placing system is easily assembled and allows a good protection of the ends of the glass pane when it is in the uppermost position, corresponding to the closed window.

In the window corners, where two sections of the guide join together, a finishing must be carried out so that this joint is effective. This operation consists in providing a curved shape to the side of the inside of the frame and adding a part functioning as a clip for better fixing the corner to the door or for shaping the guide in such a manner that it incorporates the fixing clip.

Although the described shaping seems to be sufficient for reducing the vibration and noise produced by the wind, it occurs that when the vehicle reaches a high speed, noises from the moulded corners of the window gaskets or guides, area which is also the closest to the ear of the driver and passenger, occur at the upper corners of the coupling that is in contact with the upright, which define a very narrow angle..

Traditional guide systems have aerodynamic noise drawbacks at high speeds. When in the closed position, the pressure generated shifts the glass pane from its originally designed position, in turn causing a turbulence and noise increase. Furthermore, this noise source concentrates on the window corners which are in turn areas very close to the ears of the passengers, a factor which amplifies the noise sensation.

The object of the present invention is to eliminate the drawbacks set forth by means of a guide which improves the aerodynamic sound behaviour of the door window guide preventing the window or glass pane from occupying an unfavourable position for said acoustics due to the high pressures existing when the vehicle reaches high speeds. To this end according to the invention, on the corner areas formed between the vertical and upper sides and at the bottom of the channel limited by the flaps among which the door window glass pane slides and rests, the guide has been provided with projections or resting places on which the inner flap rests in the closed position when the glass pane reaches the corners. These resting places reduce the allowance of the flaps guiding the glass pane, which must be flexible in order to perform the task they have been designed for. Furthermore, at the joining point between the flaps of the vertical and horizontal sections of the guide profile, which generate a flexible longitudinal partition on which the edge of the glass pane rests when it reaches the closed position and which also serves to limit glass pane movement, in order to increase flap rigidity. A perfect opening and closing of the window is thus achieved, as well as that the window is much more fixed to the frame when completely closed. With the disclosed arrangement, when the vehicle is travelling at high speeds a remarkable reduction of the aerodynamic noise caused by the window pane shifting from its originally designed position is achieved.

The projections or resting positions can adopt any configuration in order to improve acoustic behaviour.

The constitution and advantages derived from the guide of the invention will be better understood with the following description, made in reference to the attached drawings, in which a non-limiting embodiment is shown.

In the drawings:
Figure 1 shows a perspective exploded view showing the corner area of the frame and the guide of the door window of a vehicle.

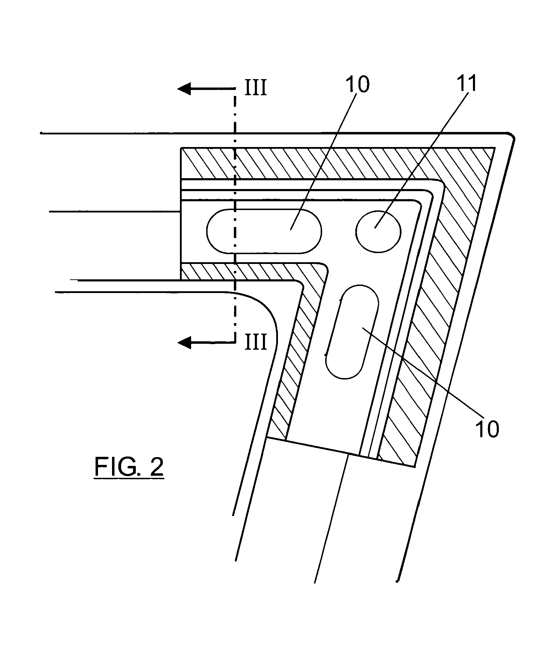

Figure 2 shows a plan view of the corner area of the profile shown in Figure 1, with the flaps guiding and leading the glass pane partially sectioned according to section line II-II of Figure 3, including the embodiment of the invention.
Figure 3 shows a cross section of the guide of the invention, taken according to section line III-III of Figure 2.

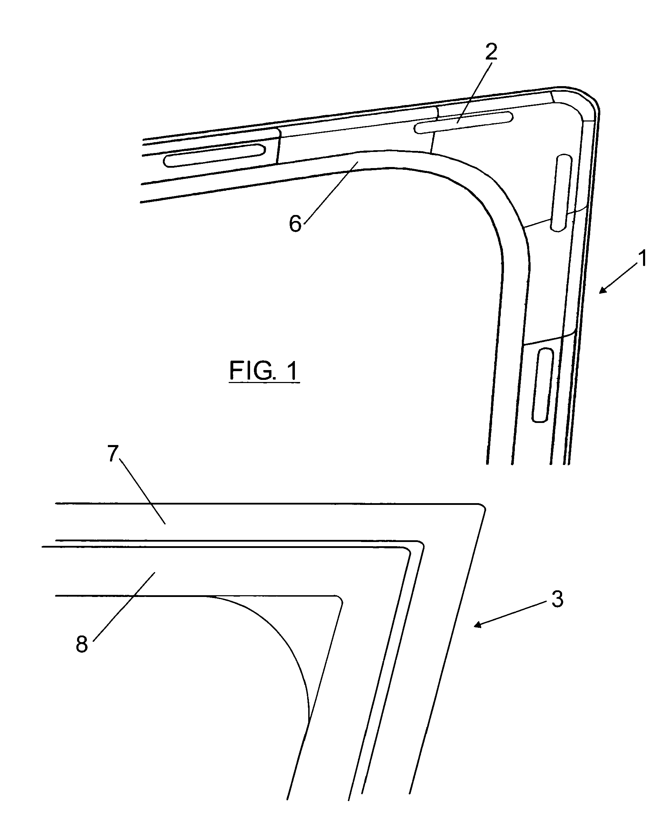

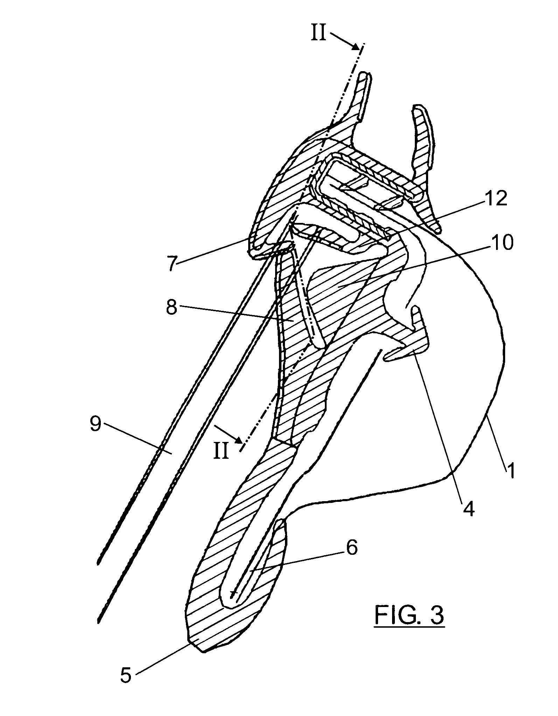

Figure 1 shows one of the upper angles 1 formed by the frame of a vehicle door which delimits the window. Along its sides, this frame has slots 2 for fixing the guide 3 for the glass panes. On its rear surface, this guide 3 has projections 4 finished in arrowhead shapes which are tightly introduced through the slots 2. Furthermore, the guide 3 constitutes a longitudinal C-shaped tab 5 which allows surrounding the innermost side or edge 6 of the door frame, thus achieving that the guide 3 completely hides the frame 1, as can be seen in Figure 3.
Assembly of this guide 3 on the frame 1 is carried out by means of the following steps or stages:
   1.- The peripheral tab 5 is adjusted around the inner edge of the enclosure or frame of the door window.
   2.- By means of a slight pressure with the fingers go over the entire coupling so that the projections 4 are introduced and set into the slots 2 of the door frame.
   3.- Finally, and once the rubber guide is correctly positioned, the corner area 3 at the bottom of which there is a fixing clip which can be introduced in a slot prepared to such end on the door frame is pressed until achieving its introduction and coupling, all this according to known arrangements and stages.
On its front portion, the guide 3 is provided with two continuous flaps 7 and 8 between which the glass pane 9 of the door window slides and rests. When this glass pane reaches its end closing position, the flap 8 is slightly folded inwardly. A channel is defined between flaps 7 and 8 from the bottom of which project, in the corner area 3, projections or resting positions 10 and 11, against which the flap 8 will rest, when flexed inwardly when the glass pane 9 reaches its end closing position. These projections or resting positions 10 and 11 serve as resting elements for the flap 8, preventing it from being bent towards the inside of the channel defined by flaps 7 and 8 by the effect of wind pressure when the vehicle is travelling at high speeds.
Flaps 7 and 8 run along the entire vertical and upper horizontal edges of the guide 3.
According to another feature of the invention, projecting from the channel defined between flaps 7 and 8 there is a flexible longitudinal partition 12, Figure 3, against which the upper edge of the glass pane will rest, preventing it from getting excessively close to the guide wall.
As usual, on its outer surface the flap 8 is provided with a coating preventing excessive friction between the glass pane and the guiding surface. For the same purpose the partition 12 is provided with a similar coating on the surface directed towards the glass pane 9.
With the described arrangement, in the profile of the invention the flaps 7 and 8 have the necessary separation to allow the correct operation of the glass pane actuation mechanism during its raising and lowering, and the projections or resting positions 10 and 11 define supports for the flap 8 against which the glass pane 9 will firmly rest, in the corner area of the window, when said glass pane reaches its upper end position, in which position the upper edge rests against partition 12.

## Claims

1. A guide for liftable glass panes of vehicle door windows, made up of a profile (3) made from elastically strainable material which is fixed along the vertical sides and the upper horizontal side of the door cavity intended for the window and having in its rear portion pin-shaped projections intended for being tightly introduced through openings in the frame, whereas in the front portion it has two continuous flaps (7, 8) between which the glass pane (9) of the door window slides and rests, **characterised in that** on the corner areas (1) formed between the vertical sides and the upper side and on the bottom of the channel delimited by the aforementioned two flaps (7, 8), it is provided with projections or resting positions (10, 11) on which the inner flap rests when the glass pane (9) reaches said corners (1) preventing its retraction and the glass pane (9) remaining compressed between the two flaps (7, 8).

2. A guide according to claim 1, **characterised in that** between the two flaps (7, 8) it is provided with a flexible longitudinal partition (12) which starts from the base of the innermost flap, on which partition (12) the edge of the glass pane (9) rests when it reaches the closing position.
